# EUROPEAN PATENT APPLICATION

(11) **EP 3 396 183 A1**
(43) Date of publication of application: **31.10.2018**
(21) Application number: 18169417.5
(22) Date of filing: 26.04.2018
(51) Int. Cl.: F16C 17/12, C09D 179/04, C08L 79/04, F16C 33/20

(54) **BEARING INCLUDING A PHTHALONITRILE-BASED POLYMER MATERIAL**

(30) Priority: 26.04.2017 US 201762490168 P
(71) Applicant: Roller Bearing Company of America, Inc., Oxford, CT 06478 (US)
(72) Inventor: Richard, Nolan, Cheshire, Connecticut 06410 (US); Adams, Frank, Irvine, California 92603 (US)
(74) Representative: AWA Sweden AB

(57) **Abstract**

A bearing including a phthalonitrile-based polymer material. In one embodiment, the bearing is configured to withstand a temperature condition of at least 600°F.

## Description

### TECHNICAL FIELD

The present disclosure is generally directed to bearings and is more specifically directed to polymeric bearings capable of withstanding high temperature operating conditions, especially temperatures from 600°F to 700°F (316 °C to 371 °C) or greater.

### BACKGROUND INFORMATION

In current state of the art polymer bearing technology, it is known to employ polyimides in bearing applications. However, these polymer bearings typically have a maximum operating temperature of only below 600°F. Also, such polymer bearings can have poor impact toughness (too brittle), high water absorptivity and poor thermo-oxidative stability, which can cause chemical degradation of the bearing and premature failure. Still further, the manufacturing of polyimide bearings often encounters processing problems such as volatilization of reaction products, residual solvent volatilization and short processing reaction times that can make processing these types of bearings difficult. Many liquid polyimide resin mixtures contain hazardous components such as 4,4-Methylenedianiline, 4,4'-oxydianiline, N-methyl-2-pyrrolidone, methyl isobutyl ketone, xylene and N,N-dimethylacetamide that make processing more difficult. Polyimide resins are sensitive to moisture and properties can be affected negatively if resin is left out in a humid environment. Polyimides also have a typical shelf-life of 6 to 12 months, so inventory must be managed carefully.

Another type of bearing employed in high temperature operating environments is a ceramic coated bearing. Typically, the ceramic coated bearing includes a metal backing and is coated with a hard ceramic such as tungsten carbide. The surface that the bearing rests on is also typically coated with a hard ceramic material. Although this type of bearing can withstand high temperatures, ceramic coated bearings are costly to manufacture and have a high coefficient of friction in use.

Accordingly, the instant invention is directed to improved bearings for use in high temperature operating environments and are especially capable of withstanding temperatures greater than 600°F (316 °C).

Embodiments of the present invention address the above needs, as well as others.

### SUMMARY

According to an aspect of the present invention, disclosed herein is a bearing including a phthalonitrile based polymer material. In one aspect of the present invention, the bearing withstands a temperature of at least 600°F. In another aspect, the bearing of the present invention withstands a temperature of 600°F to 700°F (316 °C to 371°C).

According to another aspect of the present invention, disclosed herein is a bearing including: a phthalonitrile based polymer material having at least 1.0 wt.% of phthalonitrile based on the total weight of the phthalonitrile based polymer material. In one aspect, the bearing is configured to withstand a temperature of at least 600°F. In another aspect, the bearing is configured to withstand a temperature of 600°F to 700°F.

According to yet another aspect of the present invention, disclosed herein is a bearing including: a sheet of woven fabric bonded (e.g. adhesive bonding) to at least one surface of the bearing, the sheet of woven fabric comprising a phthalonitrile based polymer material. In a further aspect of the invention, the woven fabric includes one or more lubricants.

The bearings described herein are selected from the group consisting of a plain bearing, a lined plain bearing, a flanged plain bearing, a lined flanged plain bearing, a journal bearing and a spherical plain bearing.

The bearings described herein may extend from a first end to a second end along an axis. The bearing may be annular along the axis. The bearing may further comprise a bore extending through the bearing from the first side to the second side. The bore may be adapted to receive a pin or shaft. The shaft may be rotatable relative the bearing about the axis when the shaft is received in the bore.

The bearings described herein may be made of a polymeric material comprising the phthalonitrile based polymer material. Thus, the bearings may be manufactured from the phthalonitrile based polymer material or from a polymeric material comprising the phthalonitrile based polymer material. The bearing may comprise a coating on at least one surface of the bearing. The coating may comprise the phthalonitrile based polymer material.

A further aspect of the present invention is a method of manufacturing any of the bearings described herein, the method including one of injection molding, transfer molding, compressing molding, prepeg consolidation, resin transfer molding, resin infusion, filament winding, coating, painting, and hot melt deposition.

A further aspect of the invention is the use of a bearing of the present disclosure in high temperature environments, such as in environments in which the temperature is above 316 °C, such as in environments in which the temperature is between 316 °C to 371°C.

These and other aspects of the present invention are described in more detail in the following drawings and detailed description.

### DESCRIPTION OF THE DRAWINGS

FIG. 1 is a perspective view of a plain bearing in accordance with an embodiment of the invention;
FIG. 2 is a cross-sectional view of the plain bearing of FIG. 1;
FIG. 3 is a cross-sectional view of the plain bearing of FIG. 1 with a liner in accordance with an embodiment of the invention;
FIG. 4 is a perspective view of a flanged plain bearing in accordance with an embodiment of the invention;
FIG. 5 is a cross-sectional view of the flanged plain bearing of FIG. 4;
FIG. 6 is a cross-sectional view of a lined flanged plain bearing in accordance with an embodiment of the invention;
FIG. 7 is a perspective view of a spherical plain bearing and housing assembly in accordance with an embodiment of the invention;
FIG. 8 is an enlarged cross sectional schematic illustration of a woven liner; and
FIG. 9 is an enlarged cross sectional schematic illustration of a fabric sheet.

### DETAILED DESCRIPTION

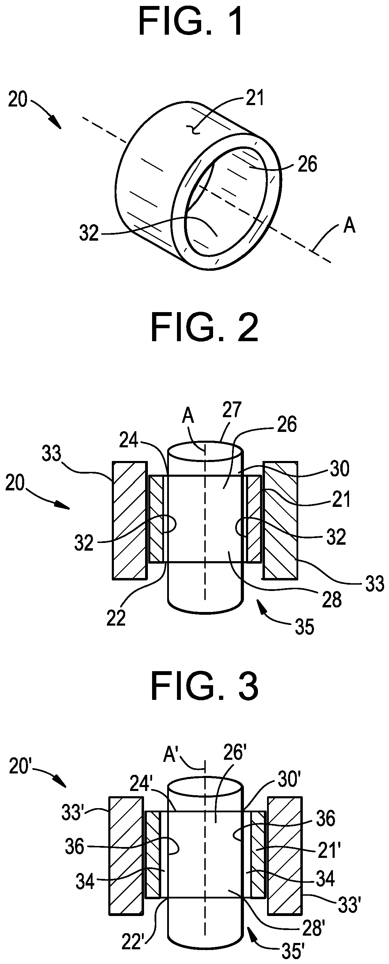

A plain bearing 20 in accordance with an embodiment of the invention is shown in FIG. 1. FIG. 2 illustrates a cross-sectional view of the plain bearing 20 of FIG. 1. With reference to FIGS. 1 and 2, the plain bearing 20 extends from a first end 22 to a second end 24 along an axis A and is generally annular (e.g., tubular) about the axis A. A bore 26 extends through the bearing 20 between a first opening 28 proximate to the first end 22 and a second opening 30 proximate to the second end 24. The bore 26 is adapted to receive a pin or shaft 27 (hereinafter referred to as "shaft"). The shaft is rotatable relative to the bearing 20 about the axis A when the shaft is received in the bore 26. An inner surface 32 defines a raceway. The raceway is in sliding engagement with the shaft when the shaft is received in the bore 26. The bearing 20 is adapted to fit into a housing 33. The bearing 20 may be pressed into the housing 33. In one embodiment, the bearing 20 has a clearance such that an exterior surface thereof can slidingly engage the housing 33. The axis A of an opening 35 in the housing 33 is substantially aligned with axis A.

FIG. 3 is a cross-sectional view of a plain bearing of FIGS. 1 and 2 further including a liner 34. An inner surface 36 of the liner 34 of the bearing 20' defines a raceway. The raceway 36 is in sliding engagement with, e.g., a shaft when the shaft is received in the bore 26'. The bearing 20' is adapted to fit into a housing 33'. The bearing 20' may be pressed into the housing 33'or have clearance such that an exterior surface thereof slidingly engages the housing. The axis of an opening 35'in the housing 33' is substantially aligned with axis A.

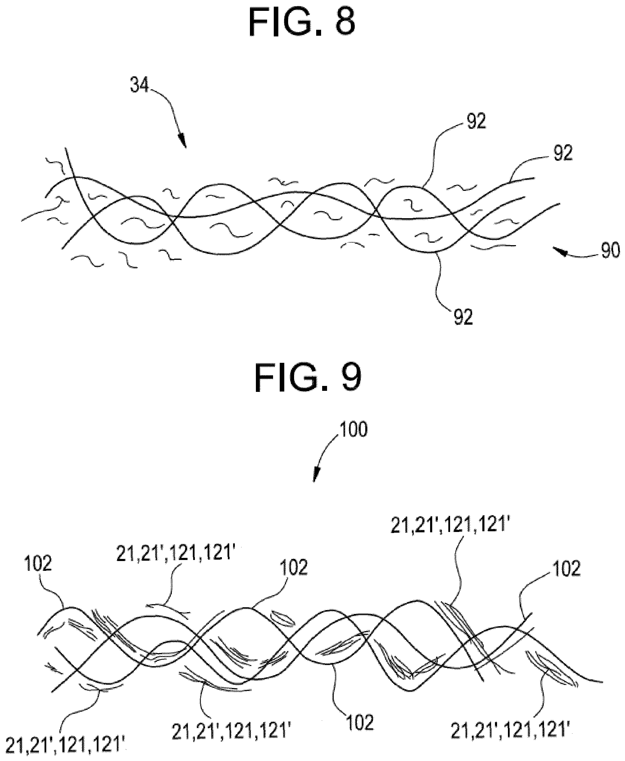

In one embodiment, the liner 34 is constructed of polytetrafluoroethylene (commercially available under the designation TEFLON®)(TEFLON is a registered trademark of E.I. DuPont De Nemours and Company, Wilmington, Delaware USA), polyester, graphite, fabric impregnated with a polymer, urethane, polyimide, epoxy, phenolic or other type of resin. In one embodiment, the liner 34 is molded and is comprised of polytetrafluoroethylene (TEFLON®), polyester, graphite, fibers in a thermosetting composite resin made from polyester, urethane, polyimide, epoxy, phenolic or other type of resin. In one embodiment, as shown for example in FIG. 8, the liner 34 is a low friction woven fabric liner generally designated by the reference number 90. The woven fabric 90 includes a plurality of fibers 92 interwoven with one another and polytetrafluoroethylene (PTFE) 96 interwoven therewith. The fibers 92 include, for example, a polyester material, a stainless steel material and/or glass material. The fibers 92 interwoven with the PTFE 96 enhance bondability of the liner 34 to the bearing 20'. In one example, the liner 34 is a fabric liners manufactured from Fabroid ®, in particular Fabroid G, which is commercially available from RBC Bearings, Oxford, Connecticut, United States. In another embodiment, the liner 34 is a fabric liner manufactured from Fiberglide, which is also commercially available from RBC Bearings.

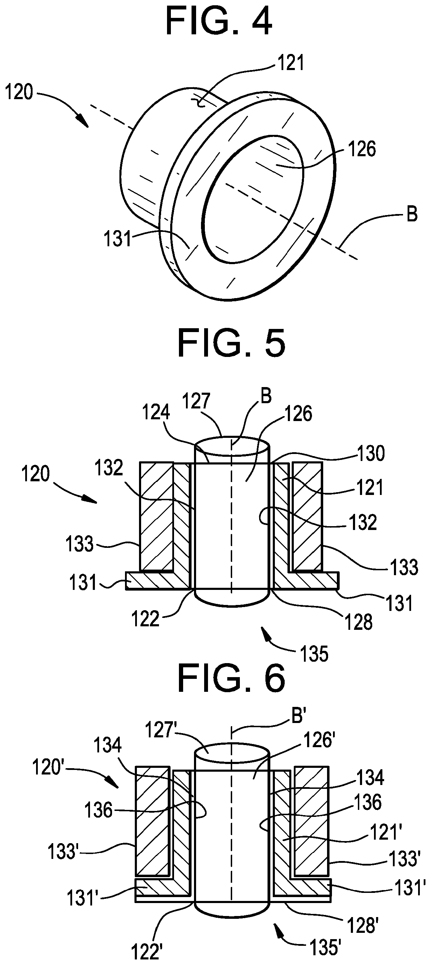

FIG. 4 depicts a flanged bearing 120 in accordance with an embodiment of the invention, and FIG. 5 depicts a cross-sectional view of the flanged bearing 120 of FIG. 4. With reference to FIGS. 4 and 5, the flanged bearing 120 extends from a first end 122 to a second end 124 along an axis B and is generally annular (e.g., tubular) about the axis B. A bore 126 extends through the bearing 120 between a first opening 128 proximate to the first end 122 and a second opening 130 proximate to the second end 124. A pin or shaft 127 (hereinafter referred to as "shaft") is disposed in the bore 126. The shaft 127 is rotatable relative to the bearing 120 about the axis B when the shaft is received in the bore 126. An inner surface 132 defines a raceway. The raceway is in sliding engagement with the shaft 127 when the shaft is received in the bore 126. The bearing 120 includes a flange 131 proximate to the first end 122. The flange 131 extends radially outward from an area proximate to the first opening 128. The bearing 120 is adapted to fit into a housing 133. In one embodiment, the bearing 120 may be pressed into the housing 133. In another embodiment, the bearing 120 has clearance such that it slidingly engages the housing 133. The axis of an opening 135 in the housing 133 is substantially aligned with axis B.

FIG. 6 depicts a cross-sectional view of a flanged bearing 120 of FIGS. 4 and 5 further including a liner 134, which is similar to liner 34 described in more detail above. An inner surface 136 of the liner 134 of bearing 120' defines a raceway. The raceway 136 is in sliding engagement with, e.g., a shaft 127' when the shaft is received in the bore 126. The flanged bearing 120' is adapted to fit into a housing 133'. In one embodiment, the flanged bearing 120' is pressed into to the housing 133'. In another embodiment, the flanged bearing 120' has clearance such that an exterior surface thereof slidingly engages the housing 133'. The axis of an opening 135' in the housing 133' is substantially aligned with axis B.

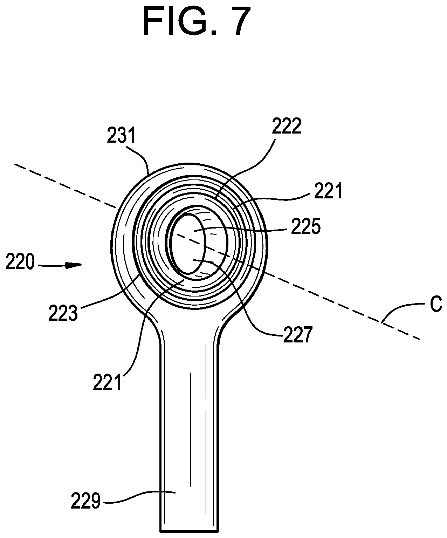

In reference to FIG. 7, depicted therein is a spherical plain bearing and housing assembly generally designated by reference numeral 220. The spherical plain bearing 222 of the assembly comprises an inner ring 221 and an outer ring 223 in contact with the inner ring 221. The inner ring 221 and the outer ring 223 are symmetrical about an axis C. Bore 225 is adapted to receive, e.g., a pin or shaft. The shaft is rotatable relative to the spherical bearing 222 about the axis C when the shaft is received in the bore 225. An inner surface 227 of the inner ring 221 defines a raceway. The raceway is in sliding engagement with the shaft when the shaft is received in the bore 225. In one embodiment, the spherical bearing 222 is pressed into a housing. In another embodiment, the spherical bearing has clearance such that it slidably engages the housing 229. In the embodiment shown in FIG. 7, the housing 229 includes a first housing portion 231 for receiving the inner ring 221 and outer ring 223, and a second housing portion 229 depicted therein as an elongated portion.

In one embodiment, bearings 20, 20', 120, 120' and 220 shown and described herein are made of polymeric material. The invention is not limited in this regard as other types of bearings not illustrated in the FIGS., including but not limited to ball bearings, roller bearings, plain bearings, self-aligning plain bearings, journal bearings, tapered roller bearings, and spherical bearings are made of polymeric material.

In one embodiment, the material employed for the various bearings is a phthalonitrile-based polymer material 21, 21', 121, 121', 221. In particular, the bearings 20, 20', 120, 120' and 220 according to this invention generally include a polymer that includes a phthalonitrile- based polymer resin (also referred to as a phthalonitrile-based polymer material) 21, 21', 121, 121', 221 as the material of construction for the bearing. All or part of the bearing 20, 20', 120, 120', 220 can include the herein described phthalonitrile-based polymer material 21, 21', 121, 121', 221. In certain embodiments, the bearing 20, 20', 120, 120' and 220 is manufactured from a homogeneous phthalonitrile-based polymer material 21, 21', 121, 121', 221. In another embodiment, the bearing 20, 20', 120, 120' and 220 is manufactured from a composite material (i.e., a material that includes more than one component) that includes the phthalonitrile-based polymer 21, 21', 121, 121', 221. The terms "phthalonitrile-based polymer" and "phthalonitrile-based polymer material" encompass both the homogeneous phthalonitrile-based polymer material and composite materials that include a phthalonitrile-based polymer 21, 21', 121, 121', 221. In particular, the terms "phthalonitrile-based polymer" and "phthalonitrile-based polymer material" encompass a polymeric material that includes at least a portion (i.e., greater than 1 weight percent based on the total weight of the polymeric material) of phthalonitrile therein.

It has been surprisingly discovered that a bearing including a phthalonitrile-based polymer material 21, 21', 121, 121', 221, e.g., either a homogeneous phthalonitrile-based polymer or a composite including a phthalonitrile-based polymer, when used in high temperatures, provides an economical bearing with good tribological properties (e.g., low coefficient of friction), high thermo-oxidative stability, and high temperature capability. In one embodiment the bearings 20, 20', 120, 120' and 220 manufactured from a phthalonitrile-based polymer material withstands (e.g, does not degrade, warp, or lose functionality) temperatures of at least 600°F (316 °C). In one embodiment, the bearing 20, 20', 120, 120' and 220 manufactured from a phthalonitrile-based polymer material 21, 21', 121, 121', 221 withstands temperatures of 600°F to 700°F (316 °C to 371 °C). In another embodiment, the bearings 20, 20', 120, 120' and 220 manufactured from a phthalonitrile-based polymer material 21, 21', 121, 121', 221 withstands temperatures of 625°F to 700°F (329°C to 371 °C). In another embodiment, the bearings 20, 20', 120, 120' and 220 manufactured from a phthalonitrile-based polymer material 21, 21', 121, 121', 221 withstands temperatures of 650°F to 700°F (343°C to 371 °C). In yet another embodiment, the bearings 20, 20', 120, 120' and 220 manufactured from a phthalonitrile-based polymer material 21, 21', 121, 121', 221 withstands temperatures of 670°F to 700°F (354°C to 371 °C).

It is contemplated that any phthalonitrile may be used in the phthalonitrile-based polymer material 21, 21', 121, 121', 221 used in the manufacture of bearings 20, 20', 120, 120' and 220. Phthalonitrile has the chemical formula C₆H₄(CN)₂. Phthalonitrile-based polymer resins are thermoset resins. Phthalonitrile-based polymer material is formed by a reaction between a phthalonitrile monomer and/or oligomer and curing additive(s) with or without the use of a solvent. Thus, the phthalonitrile-based polymer material is advantageously created when a phthalonitrile monomer and/or phthalonitrile oligomer is mixed with one or more curing additives.

In one embodiment, phthalonitrile reactants include 4,4'-bis(3,4-dicyanophenoxy)biphenyl monomer and phthalonitrile monomers or oligomers containing aromatic ether, imide, sulfone and thioether linkages between terminal phthalonitrile units. In another embodiment, phthalonitrile reactants include, but are not limited to, resorcinol, bisphenol A, 4,4'-bis(3,4-dicyanophenoxy)biphenyl, 2,2-bis[4-(3,4-dicyanophenoxy)phenyl]-hexafluoropropane, 2,2-bis[4-(3,4-dicyanophenoxy)phenyl]propane, 1,3-bis(3,4-dicyanophenoxy)benzene, multiple aromatic ether-linked phthalonitriles which contain an aromatic ether phosphine oxide unit in the backbone, and phthalonitrile oligomers with meta-substituted aromatic ether linkages between the terminal phthalonitrile units. Thus, according to certain embodiments, the phthalonitrile reaction components can be a monomer such as, but not limited to, 4,4'-bis(3,4-dicyanophenoxy)biphenyl and/or an oligomer such as, but not limited to, a phthalonitrile oligomer with meta-substituted aromatic ether linkages between the terminal phthalonitrile units. The term "phthalonitrile monomers" as used herein encompass both monomers and oligomers of phthalonitriles.

Suitable curing additives include, but are not limited to, metals, metallic salts, amines (including, e.g., organic amines, aromatic amines, etc.), strong organic acids and strong organic acid-amine salts. Specific examples of curing additives include, but are not limited to, 1,3-bis(3-aminophenoxy)benzene, 1,4-bis(4-aminophenoxy)benzene, bis[4-(3-aminophenoxy)phenyl]sulfone, bis[4-(3-aminophenoxy)phenyl]sulfone, 4,4'-diaminodiphenylsulfone and Bis[4-(4-aminophenoxy)phenyl]sulfone. Additionally, stable, nonvolatile amines can be used as a curing additive.

In an particular example, a curing additive used to form the phthalonitrile-based polymer material 21, 21', 121, 121', 221 for manufacture of the bearing 20, 20', 120, 120' and 220 is a diamine curing additive. Specific diamine curing additives include: (1): 1, 3-bis(3-aminophenoxy)benzene and an example of a phthalonitrile monomer (2): 4,4'-bis(3,4-dicyanophenoxy)biphenyl are set forth below.

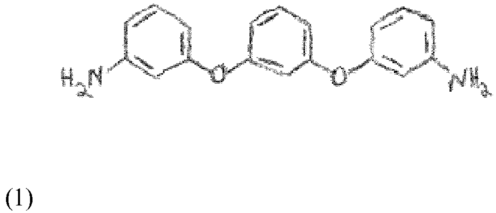

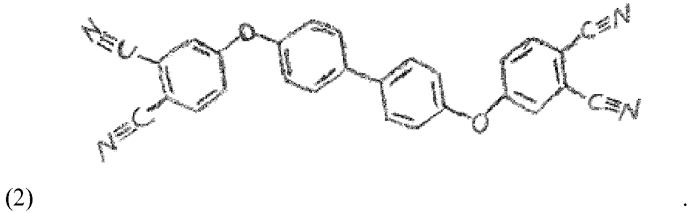

Various types of phthalonitrile compounds and curing additives used to form the phthalonitrile-based polymer material 21, 21', 121, 121', 221 for manufacture of the bearing 20, 20', 120, 120' and 220 are also described in e.g., U.S. Pat. Nos. 3,730,946; 3,763,210; 3,787,475; 3,869,499; 3,972,902; 4,209,458; 4,223,123; 4,226,801; 4,234,712; 4,238,601; 4,259,471; 4,304,896; 4,307,035; 4,315,093; 4,351,776; 4,408,035; 4,409,382; 4,410,676; 5,003,039; 5,003,078; 5,004,801; 5,132,396; 5,159,054; 5,202,414; 5,208,318; 5,237,045; 5,242,755; 5,247,060; 5,292,854; 5,304,625; 5,350,828; 5,352,760; 5,389,441; 5,464,926; 5,925,475; 5,939,508; 5,965,268; 6,001,926; 6,297,298; 6,756,470; 6,891,014; 7,452,959; 7,511,113; 7,642,336 B2; and 8,222,403, where the phthalonitrile compounds include, but are not limited to phthalonitrile monomers according to the formula: 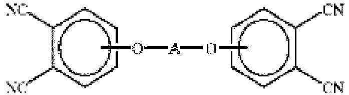 where A is any divalent organic radical, and for example, A is selected from the group consisting of substituted or unsubstituted phenyl radicals, polyphenyl radicals, polyphenoxy radicals, fused aromatic poly-ring radicals and radicals of the general form -Ar-Z-Ar- where Ar is a substituted or unsubstituted aromatic group and Z is 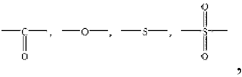 any alkylene of up to six carbon atoms, any halogenated alkylene of up to six carbon atoms, an imide-containing group or a connecting bond; heteroaromatic phthalonitriles; 3- or 4-nitrophthalonitrile; hydroxy arylether phthalonitile; di-phthalonitrile monomers, including: bis (3,4-dicyanophenyl -2-tetrafluoroethoxy) -1,5-perfluoropentane, bis (3,4-dicyanophenyl)hexene, bis (3,4-dicyanophenyl) ether of bisphenol A or bisphenol S, bis (3,4-dicyanophenyl) ether of 4,4'-dihydroxybenzophenone, bisorthodinitrile ofhexafluoroacetone bisphenol A, 4,4'-bis(3,4-dicyanophenoxy) diphenyloxide, 2,7-bis(3,4-dicyanophenoxy) naphthalene, 1,3-bis(3,4-dicyanophenyl) oligomeric polyarylether sulfone phthalonitrile monomer, 1,3 or 1,4-bis(3,4-dicyanophenoxy)benzene, imide-containing di-phthalonitrile from 3,3',4,4'-benzophenonetetracarboxylic dianhydride and 4-(3-aminophenoxy) phthalonitrile, 4,4'-(hexafluoroisopropylidene) diphthalic anhydride, and 4,4'-bis(3,4-dicyanothiophenoxy) biphenyl; fluorinated pthalonitriles; and the like. Curing agents include, but are not limited to hydroxy-terminated aromatic ether oligomer; an acid and an amine; a salt of an acid and an amine; a mixture of an acid and amine and a salt of an acid an amine; 1,3-bis(3-aminophenoxy)benzene.

Manufacturing a bearing 20, 20', 120, 120' and 220 with a phthalonitrile-based polymer material 21, 21', 121, 121', 221 according to the present invention includes a prepolymer or prepolymerization composition formed from reaction of an amine with a melt of a phthalonitrile monomer and stored for later use with, e.g., an indefinite shelf life under ambient conditions. In one embodiment, a prepolymer composition is formed by mixing various amounts of phthalonitrile monomer and curing additive, such as an aromatic amine, at room temperature. The prepolymer composition will polymerize upon melting such that the rate of polymerization is controlled by controlling the amount of curing additive in the prepolymer composition. The use of a prepolymer composition allows the resin to be processed by traditional methods without the need for a solvent.

After full curing of the prepolymer, the resulting phthalonitrile-based polymer material 21, 21', 121, 121', 221 has advantageous properties such as the absence of a glass transition temperature upon exposure to temperatures in excess of 707°F (375°C), good mechanical property retention in excess of 707°F (375°C), excellent flame resistance and thermo-oxidative stability approaching 707°F (375°C), excellent water resistance and low porosity. With post-curing at elevated temperatures, carbon reinforced sample panels of phthalonitrile-based polymer material can maintain up to 90% of room temperature storage modulus at 842°F (450°C). Thus, bearings 20, 20', 120, 120' and 220 including the phthalonitrile-based polymer material 21, 21', 121, 121', 221 demonstrate similar properties, *i.e.,* absence of a glass transition temperature upon exposure to temperatures in excess of 707°F (375°C), good mechanical property retention in excess of 707°F (375°C), excellent flame resistance and thermo-oxidative stability approaching 707°F (375°C), excellent water resistance and low porosity.

Regarding the desired shape of the bearing 20, 20', 120, 120' and 220, the bearings are manufactured using polymer and polymer composite fabrication methods such as, but not limited to, injection molding, transfer molding, compressing molding, prepeg consolidation, resin transfer molding, resin infusion, filament winding, coating, painting, and hot melt deposition. Accordingly, as noted above, phthalonitrile-based polymers are thermoset polymers, and can advantageously be processed by conventional methods used to process other thermoset materials such as polyimides, polyesters, polyurethanes, and so forth. Further, phthalonitrile-based polymers can be used to manufacture composites of desired shape by conventional methods used to manufacture polymer-matrix composites, such as epoxy-carbon fiber composites, polyester-carbon fiber composites, and so forth, as explained above.

When bearing 20, 20', 120, 120' and 220 is manufactured from a composite material, *i.e.,* more than one component, one preferred method of composite bearing manufacturing includes a braided or biaxial sleeve or preform made of woven fiber or fiber-wool, made from fibers such as but not limited to carbon fiber or silicon carbide fiber, that is compacted into a mold cavity that may represent about the net shape of the final bearing, flanged or non-flanged, to be produced. For flanged bearings, a ram exerts pressure along a longitudinal axis (e.g., axis A) of the preform which displaces a portion of the preform radially outward to fill the section of the mold cavity which represents the flanged section 131, 131' of the bearing 120, 120'. While the woven sleeve is compressed into the mold cavity, phthalonitrile pre-polymer or a phthalonitrile curing additive mixture is heated above its melting point to the appropriate viscosity and is injection or transfer molded into the cavity. The polymer can then be cured in the mold cavity until it can be removed without compromising its shape. Once removed, the part can be further cured if necessary. The part can also be left in the mold cavity for the entire cure process. Various solid lubricants or fillers can be incorporated into the phthalonitrile matrix to provide self-lubricating or enhanced mechanical properties to the final composite. U.S. Patent No. 4,983,240 describes methods of making braided bearings.

In another embodiment, a bearing 20, 20', 120, 120' and 220 is manufactured from, *e.g.,* steel, steel alloys, nickel alloys, aluminum, aluminum alloys, silicon nitride, silicon carbide, zirconium, ceramic, and/or a polymer (such as, e.g., the phthalonitrile-based polymer material 21, 21', 121, 121', 221) wherein a liquid or semi-solid mixture is painted or spread onto one or more surfaces of the bearing where such a coating is desired. In one embodiment, the liquid or semi-solid mixture includes the phthalonitrile-based polymer material 21, 21', 121, 121', 221. After drying, the coating can be machined, or cured partially and then machined. After any desired machining operation, the coating can undergo further curing to complete the crosslinking of the phthalonitrile to whatever degree is desired without significant dimensional change. Reinforcing filler materials and/or lubricating materials can be mixed into the solvent/pre-polymer solution. Examples of fillers include but are not limited to PTFE powder, PTFE flock, tungsten disulfide powder, hexagonal boron nitride powder, graphite powder, chopped and short strand fibers of graphite, glass powder, glass microspheres, glass fibers, metallic fibers, metallic spheres, silicon carbide particles, silicon carbide fibers, thermally conductive particles, graphite fluoride, silica fume, inorganic powders, mica, titanium dioxide, wollastonite, micro-wool, and the like, and combinations thereof.

In another method a bearing 20, 20', 120, 120' and 220 is manufactured by winding fibers around a mandrel, with at least one braided strand parallel to axis A of the bearing to form a woven net shape preform that can then be impregnated with phthalonitrile pre-polymer melt or a mixture of phthalonitrile monomer and curing additive. Having strands parallel to bearing axis A of the bearing 20, 20', 120, 120' and 220 provides increased strength to the bearing. The woven preform is then placed or pressed into a mold cavity, on or off of the original mandrel on which it was wound, and impregnated with the phthalonitrile prepolymer melt or the melt of a phthalonitrile monomer/curing additive mixture. Various solid lubricants or fillers can be incorporated into the phthalonitrile matrix to provide self-lubricating or enhanced mechanical properties to the final bearing 20, 20', 120, 120' and 220.

In a further embodiment a bearing 20, 20', 120, 120' and 220 includes continuous fiber strands drawn through a bath of phthalonitrile prepolymer melt or a melt of a phthalonitrile monomer/curing additive mixture and wrapped around a mandrel to form a tube of wound and impregnated fibers. The winding pattern, selection of fiber material, and fiber size are among the many process variables that may affect the performance of the final product. The tube can then be cured and later machined into flanged or non-flanged bearings 20, 20', 120, 120' and 220. Various solid lubricants or fillers can be incorporated into the phthalonitrile matrix to provide self-lubricating or enhanced mechanical properties to the final composite. Examples of fillers include but are not limited to PTFE powder, PTFE flock, tungsten disulfide powder, hexagonal boron nitride powder, graphite powder, chopped and short strand fibers of graphite, glass powder, glass microspheres, glass fibers, metallic fibers, metallic spheres, silicon carbide particles, silicon carbide fibers, thermally conductive particles, graphite fluoride, silica fume, inorganic powders, mica, titanium dioxide, wollastonite, micro-wool, and the like, and combinations thereof.

In another embodiment, functional or non-functional filler materials are mixed into a phthalonitrile pre-polymer melt or a melt of a phthalonitrile monomer/curing additive mixture without solvent to form the phthalonitrile-based polymer material 21, 21', 121, 121', 221, which is a composite matrix in this embodiment. The fillers include but are not limited to PTFE powder, PTFE flock, tungsten disulfide powder, hexagonal boron nitride powder, graphite powder, chopped and short strand fibers of graphite, glass powder, glass microspheres, glass fibers, metallic fibers, metallic spheres, silicon carbide particles, silicon carbide fibers, thermally conductive particles, graphite fluoride, silica fume, inorganic powders, mica, titanium dioxide, wollastonite, micro-wool, and the like, and combinations thereof. The fillers are mixed uniformly into the phthalonitrile melt and used as a liquid thermosetting resin for processes such as but not limited to injection molding, transfer molding, compression molding, cavity molding extrusion, and so forth to form the bearing 20, 20', 120, 120' and 220.

As shown in FIG. 9, in another embodiment the bearing 20, 20', 120, 120' and 220 includes sheets of woven fabric 100 including fibers 102 and a phthalonitrile-based polymer material 21, 21', 121, 121', 221. In particular, sheets of woven fabric 100 are impregnated with a phthalonitrile pre-polymer melt or a melt of a phthalonitrile monomer/curing additive mixture and B-staged by heat cure or by placing the sheets in a planishing press where they are cured under heat and pressure. The fibers 100 include, for example, a polyester material, a stainless steel material and/or glass material. The sheets 100 can then be bonded to the desired surfaces of the bearing 20, 20', 120, 120' and 220 using the various methods known for the manufacture of lined bearings. Various solid lubricants or fillers as described above can be incorporated into the phthalonitrile matrix to provide self-lubricating or enhanced mechanical properties to the final bearing 20, 20', 120, 120' and 220.

The phthalonitrile-based polymer material 21, 21', 121, 121', 221 that are composite matrix materials include a phthalonitrile-based polymer and one or more various additional materials including, but not limited to, powders, fibers, fabrics and wools, depending upon the desired application. For example, structural reinforcements in the phthalonitrile based polymer material 21, 21', 121, 121', 221 composite matrix materials provide enhanced mechanical and tribological properties. As mentioned above, examples of structural reinforcement materials include, but are not limited to, carbon fibers, silicon carbide or other ceramic fibers, metallic fibers, glass fibers, and woven fabric. Examples of fiber types include, but are not limited to, chopped, woven and continuous tow, as well as discontinuous fibers. As mentioned in more detail above, the phthalonitrile-based polymer material 21, 21', 121, 121', 221 composite matrix materials include, in some embodiments, lubricating materials to lower friction and enhance other tribological properties of the resulting composite. Examples of lubricating materials include, but are not limited to, hexagonal boron nitride, graphite, polytetrafluoroethylene (PTFE), molybdenum disulfide, and tungsten disulfide. The amount of structural reinforcing material and/or lubricating material incorporated into the the phthalonitrile-based polymer material 21, 21', 121, 121', 221 is typically about 1-50 mass% of the total polymer material mass but is not limited to this range.

Although the present invention has been disclosed and described with reference to certain embodiments thereof, it should be noted that other variations and modifications may be made, and the various elements and embodiments including the various constituents, materials, and so forth, described herein can be used in any combination with each other, and it is intended that the following claims cover the variations and modifications within the true scope of the invention.

## Claims

1. A bearing (20, 20', 120, 120') comprising a phthalonitrile based polymer material (21, 21', 121, 121').

2. A bearing (20, 20', 120, 120') according to claim 1, wherein the bearing (20, 20', 120, 120') is configured to withstand a temperature from 600°F to 700°F.

3. The bearing (20, 20', 120, 120') according to any one of the preceding claims, wherein the phthalonitrile-based polymer material (21, 21', 121, 121') is a phthalonitrile based polymer matrix composite.

4. The bearing (20, 20', 120, 120') according to claim 3, wherein the phthalonitrile based polymer matrix composite comprises at least one of a powder, fiber, fabric and wool.

5. The bearing (20, 20', 120, 120') according to one of claim 3 and claim 4, wherein the phthalonitrile-based polymer matrix composite comprises a structural reinforcing material selected from the group consisting of carbon fibers, silicon carbide fibers, ceramic fibers, metallic fibers, glass fibers, woven fabric, and combinations thereof.

6. The bearing (20, 20', 120, 120') according to any one of claims 3-5, wherein the phthalonitrile based-polymer matrix composite comprises a lubricating material.

7. The bearing (20, 20', 120, 120') according to claim 6, wherein the lubricating material is selected from the group consisting of hexagonal boron nitride, graphite, polytetrafluoroethylene (PTFE), molybdenum disulfide, tungsten disulfide, and combinations thereof.

8. The bearing (20, 20', 120, 120') according to any one of the preceding claims, wherein the bearing (20, 20', 120, 120') is selected from the group consisting of a plain bearing, a lined plain bearing, a flanged plain bearing, a lined flanged plain bearing, a journal bearing and a spherical plain bearing.

9. The bearing (20, 20', 120, 120') according to claim 8, wherein the bearing is a lined bearing comprising a liner (34, 134) and the liner (34, 134) comprises a phthalonitrile-based polymer material (21, 21', 121, 121').

10. The bearing (20, 20', 120, 120') according to any one of the preceding claims, wherein the phthalonitrile based polymer material (21, 21', 121, 121') is a cured phthalonitrile based polymer configured to have an absence of a glass transition temperature upon exposure to temperatures greater than 707°F.

11. The bearing (20, 20', 120, 120') according to any one of the preceding claims, wherein:
the phthalonitrile-based polymer material (21, 21', 121, 121') comprises at least 1.0 wt.% of phthalonitrile based on the total weight of the phthalonitrile based polymer material (21, 21', 121, 121').

12. The bearing (20, 20', 120, 120') according to any one of the preceding claims, further comprising:
a sheet of woven fabric bonded to at least one surface of the bearing, the sheet of woven fabric comprising a phthalonitrile based polymer material (21, 21', 121, 121').

13. Use of a bearing (20, 20', 120, 120') according to any one of the preceding claims in environments in which the temperature is above 316 °C.
